# EUROPÄISCHE PATENTANMELDUNG

(11) **EP 3 450 140 A1**
(43) Veröffentlichungstag der Anmeldung: **06.03.2019**
(21) Anmeldenummer: 18183648.7
(22) Anmeldetag: 16.07.2018
(51) Int. Cl.: B29C 65/08, B65B 51/22, B06B 3/04

(54) **VERPACKUNGSANLAGE**

(30) Priorität: 05.09.2017 DE 102017215535
(71) Anmelder: Robert Bosch GmbH, 70442 Stuttgart (DE)
(72) Erfinder: Liebler, Marko, 75015 Bretten (DE); Koo Sin Lin, Coralie, 71332 Waiblingen (DE); Brehm, Holger, 71729 Erdmannhausen (DE)

(57) **Zusammenfassung**

Die vorliegende Erfindung betrifft eine Verpackungsanlage (1) umfassend ein Megaschallsiegelgerät (3) zum Verschweißen von Verpackungen (2), wobei das Megaschallsiegelgerät (3) aufweist: einen Schallleitkörper (4) zum Leiten von Ultraschallwellen, und eine Vielzahl von piezokeramischen Platten (5), die an dem Schallleitkörper (4) angebracht sind und die sich entlang jeweils einer Längsachse erstrecken, wobei durch elektrische Anregung der piezokeramischen Platten (5) Ultraschallwellen generierbar sind, und wobei ein Abstand jeder piezokeramischen Platte (5) von einer vordefinierten Referenzachse (6), die zu den Längsachsen parallel ist, identisch ist.

## Beschreibung

Die vorliegende Erfindung betrifft eine Verpackungsanlage. Insbesondere betrifft die Erfindung eine Verpackungsanlage umfassend ein Megaschallsiegelgerät, wobei mit dem Megaschallsiegelgerät eine Verpackung versiegelbar ist.

Aus dem Stand der Technik sind Ultraschallsonotroden bekannt, die einen Booster aufweisen. Diese Technologie ist sehr teuer und anfällig für schwankende Umgebungsbedingungen. Außerdem ist das Versiegeln von dünnen Verpackungen erschwert. Insbesondere sind solche Ultraschallsonotroden, wie sie im Stand der Technik für Verpackungsverschweißungsaufgaben eingesetzt werden, schwer, nicht kompakt, teuer aufgrund von komplexen Geometrien und nicht für dünne Verpackungsmaterialien geeignet.

Ebenso werden in der Medizintechnik Ultraschallwandler verwendet, die mit einer Frequenz zwischen 0,5 MHz und 5 MHz betrieben werden. Solche Ultraschallwandler können eine flache Piezokeramik und eine akustische Linse aufweisen, die auf einen vordefinierten Bereich fokussiert. Solche Bereiche können insbesondere innerhalb von Fluiden oder Geweben liegen. Es können alternativ auch mehrere Piezokeramikplatten als eine einzige Platte zusammengesetzt sein, wobei der Fokusbereich oder die Fokuslinie dadurch erreicht wird, dass die einzelnen Piezokeramikplatten unterschiedlich angesteuert werden (hier ist eine elektrische Zeitsteuerung oder Phasensteuerung der einzelnen Piezokeramiken notwendig). Ebenso lassen sich kugelförmige Piezokeramiken verwenden, um einen Fokusbereich zu generieren. Dazu werden die kugelförmigen Piezokeramiken entweder zusammen mit der zuvor beschriebenen Vielzahl von phasengesteuerten Piezokeramiken verwendet, oder es wird eine Kugelform und eine Kegelform für die piezokeramischen Elemente verwendet. In einer weiteren Alternative wird eine Vielzahl von piezokeramischen Kugelelementen verwendet, die eine Fokuslinie bilden. Diese Fokuslinie kann auf einem Fluid oder einem Gewebe liegen. Weitere unterschiedliche Anwendungsfälle sind ebenfalls bekannt. Alle diese Anwendungsfälle haben jedoch die Nachteile, dass eine akustische Linse verwendet werden muss oder eine aufwendige Steuerung zu implementieren ist. Eine akustische Linse hat jedoch die Nachteile, dass es schwer ist, ein geeignetes Material für die Linse zu finden, das einerseits geforderte Materialanforderungen wiederspiegelt und andererseits in eine gewünschte Position fokussiert. Der Fokuspunkt und die Intensität der übermittelten Schallwellen sind sehr stark abhängig von Variationen in den Materialeigenschaften. Außerdem besteht ein Problem mit der Präzision des Fokuspunktes. Wird ein elliptisches Profil benötigt, so ist die Linse sehr aufwendig und teuer herzustellen. Außerdem kann der Aufbau mittels akustischer Linse nicht kompakt gestaltet werden. Des Weiteren besteht ein hoher Verlust beim Übergang der Schallwellen von dem Ultraschallwandler zu der akustischen Linse. Nicht zuletzt ist zu erwähnen, dass eine aufwendige Ankopplung, beispielsweise mittels Flüssigkeit oder Klebstoff, von Linse und Schallleitkörper vorgenommen werden muss.

Bei der Verwendung von mehreren Arrays von Ultraschallwandlern ist, wie beschrieben, eine aufwendige elektrische Steuerung notwendig. Diese aufwendige Steuerung ist nur mit großem Aufwand und damit sehr teuer herzustellen. Außerdem ist der gesamte Ultraschallwandler kompliziert zu fertigen, da eine Vielzahl von piezokeramischen Elementen in einer Matrix gefertigt werden müssen. Die Matrix ist üblicherweise aus einem Epoxidharz gefertigt, was die Verarbeitung von Zweikomponentenmaterialien notwendig macht. Aufgrund von hohen Temperaturen innerhalb der Matrix während des Betriebs ist eine kontinuierliche Produktion nicht möglich.

Aus dem Stand der Technik ist beispielsweise die DE 10 2013 212 697 A1 bekannt, die ein sphärisch geformtes piezokeramisches Element aufweist. Aus den Dokumenten DE 10 2008 044 370 A1 und DE 10 2013 212 715 A1 sind Schweißgeräte bekannt, die einen Ultraschallwandler, einen Schallleitkörper sowie eine akustische Linse aufweisen.

### Offenbarung der Erfindung

Die erfindungsgemäße Verpackungsanlage umfasst ein Megaschallsiegelgerät, das hochintensiv fokussierte Ultraschallwellen, insbesondere Megaschallwellen, erzeugen kann, wodurch ein sicherer und zuverlässiger und gleichzeitiger präziser Schweißvorgang durchgeführt werden kann. Insbesondere entsteht lediglich eine lokale Erwärmung. Die Elektronik, die zum Ansteuern des Megaschallsiegelgeräts benötigt wird, ist sehr einfach, während gleichzeitig einfache Geometrien verwendet werden, um somit ein Fertigen des Megaschallsiegelgeräts und damit der gesamten Verpackungsanlage zu vereinfachen. Außerdem kann das Megaschallsiegelgerät der Verpackungsanlage sehr kompakt gefertigt werden. Mittels der Verpackungsanlage können unterschiedliche Verpackungsmaterialien verwendet werden, wobei durch das Megaschallsiegelgerät ermöglicht ist, dass hohe Temperaturen erreicht werden, ohne dass Flüssigkeiten oder viskose Kopplungsmedien verwendet werden müssen.

Die erfindungsgemäße Verpackungsanlage umfasst ein Megaschallsiegelgerät. Das Megaschallsiegelgerät ist ausgebildet zum Verschweißen von Verpackungen. Bei den Verpackungen handelt es sich insbesondere um Kunststofffolien, bevorzugt Schlauchbeutelverpackungen, die ein zu verpackendes Gut umschließen. Durch das Verschweißen lässt sich die Verpackung Versiegeln, um somit das zu verpackende Gut vollständig von einer Umgebung abzugrenzen. Das Megaschallsiegelgerät weist einen Schallleitkörper sowie eine Vielzahl von piezokeramischen Platten auf. Die piezokeramischen Platten sind an dem Schallleitkörper angebracht und erstrecken sich entlang jeweils einer Längsachse. Als Längsachse ist dabei eine solche Achse zu verstehen, die eine größte Abmessung der piezokeramischen Platte umfasst. Sämtliche Längsachsen der piezokeramischen Platten sind insbesondere parallel zueinander ausgerichtet. Außerdem ist vorgesehen, dass ein akustischer Abstand jeder piezokeramischen Platte von einer vordefinierten Referenzachse, die zu den Längsachsen parallel ist, identisch ist. Dies bedeutet, dass in jeder Schnittebene senkrecht zu Referenzachse und Längsachsen ein Referenzpunkt definiert ist, wobei der Referenzpunkt zu jedem Querschnitt der piezokeramischen Platten einen identischen akustischen Abstand aufweist. Somit erreichen gleichzeitig von den piezokeramischen Platten ausgesandte Ultraschallwellen, insbesondere Megaschallwellen, die Referenzachse ebenfalls gleichzeitig.

Besonders vorteilhaft ist vorgesehen, dass der Schallleitkörper Ultraschallwellen allesamt auf die Referenzachse lenkt. Somit sammeln sich die Ultraschallwellen auf der Referenzachse, wodurch hier eine hohe Energie freigesetzt werden kann. Auf diese Weise lassen sich Materialien mit einer Dicke zwischen 5 µm und 50 mm, insbesondere zwischen 10 µm und 40 mm, verschweißen. Somit lassen sich mittels der Verpackungsanlage Verpackungen sicher und zuverlässig, und dabei insbesondere hochgenau, versiegeln.

Soll mittels der Verpackungsanlage eine Verpackung verschweißt werden, so werden die piezokeramischen Platten bevorzugt durch elektrische Felder angeregt. Durch Piezoeffekte werden somit die piezokeramischen Platten in Schwingungen versetzt. Diese mechanischen Schwingungen werden auf den Schallleitkörper übertragen, wodurch Ultraschallwellen generiert werden. Besonders vorteilhaft werden Megaschallwellen generiert, die in einem Frequenzbereich von 400 kHz bis 2 MHz liegen. Die Ultraschallwellen breiten sich entlang des Schallleitkörpers aus, wobei, wie zuvor beschrieben, der Schallleitkörper bevorzugt derart geformt ist, dass sämtliche Ultraschallwellen auf die Referenzachse gelenkt werden. Somit lässt sich auf einfache Art und Weise ein fokussierter Ultraschallwandler erstellen, so dass hochgenau große Energiemengen zum Verschweißen von Verpackungen bereitgestellt werden können.

Die Unteransprüche zeigen bevorzugte Weiterbildungen der Erfindung.

Bevorzugt ist vorgesehen, dass alle piezokeramischen Platten tangential an einer Referenzellipse angeordnet sind. Der Mittelpunkt der Referenzellipse ist bevorzugt auf der Referenzachse angeordnet. Auf diese Weise ist sichergestellt, dass sämtliche piezokeramischen Platten denselben akustischen Abstand von der Referenzachse aufweisen. Dies bedeutet, dass alle Wellen, egal von welcher piezokeramischen Platte diese ausgesandt werden, zu selben Zeit die Referenzachse erreichen. In der Referenzachse bündeln sich somit die Ultraschallwellen, die durch die piezokeramischen Platten generiert werden. Dabei ist insbesondere vorgesehen, dass sich die Ultraschallwellen innerhalb des Schallleitkörpers orthogonal von den piezokeramischen Platten weg ausbreiten. Der Schallleitkörper schließt die Referenzachse bevorzugt nicht mit ein, so dass die Ultraschallwellen aus dem Schallleitkörper austreten müssen, um die Referenzachse zu erreichen. Beim Austritt aus dem Schallleitkörper entsteht ein Beugungswinkel, so dass die Referenzachse erreicht werden kann.

Jede der piezokeramischen Platten liegt mit einer Seitenfläche vollständig an dem Schallleitkörper an. Somit kann eine optimale Übertragung von Schwingungen zwischen piezokeramischen Platten und Schallleitkörpern erfolgen. Auf diese Weise erfolgt ein einfaches und aufwandsarmes Generieren von Ultraschallwellen, die an der Grenzfläche zwischen Schallleitkörper und piezokeramischer Platte entstehen. Insbesondere ist auf diese Weise die Ansteuerung der Verpackungsanlage, insbesondere des Megaschallsiegelgeräts, vereinfacht, so dass ein einfaches und aufwandsarmes Verschweißen von Verpackungen ermöglicht ist.

Die Piezokeramischen Platten weisen bevorzugt eine Eigenfrequenz zwischen 0,5 MHz und 5,0 MHz auf. Insbesondere weisen alle piezokeramischen Platten dieselbe Eigenfrequenz auf. Die piezokeramischen Platten werden besonders vorteilhaft lediglich in ihrer Eigenfrequenz betrieben. Dies vereinfacht das Ansteuern der piezokeramischen Platten. Dabei ist insbesondere vorgesehen, dass eine Länge und eine Breite der piezokeramischen Platten, die in einer Ebene parallel zu der Referenzachse gemessen werden, zumindest das dreifache, insbesondere zumindest das vierfache, der Dicke der piezokeramischen Platten betragen, wobei die Dicke senkrecht zu beschriebener Ebene gemessen wird. Eine derartige Größenordnung ist sichergestellt, dass eine optimale Resonanz bei Ansteuern der piezokeramischen Platten erfolgt.

Der Schallleitkörper weist bevorzugt einen Querschnitt auf, der einem Fragment eines Polygons entspricht. Der Schallleitkörper weist Außenflächen auf, wobei an jeder Außenfläche eine piezokeramische Platte angebracht ist. Insbesondere ist zumindest eine piezokeramische Platte an jeder Außenfläche angebracht. Im Rahmen dieser Erfindung wird als Außenfläche insbesondere keine solche Fläche angesehen, die nur aufgrund des Ausbruchs des Fragments aus dem regelmäßigen Polygon entsteht. Dies sind insbesondere solche Flächen, die zu der Referenzachse hinweisen. Insbesondere liegen alle Außenflächen tangential an einer Nominalellipse an. Besagte Nominalellipse ist besonders vorteilhaft die zuvor beschriebene Referenzellipse. Jede Außenfläche entspricht somit in besagtem Querschnitt einer Kante des Polygons. Durch eine derartige Form des Schallleitkörpers wird erreicht, dass dieser eine Vielzahl von piezokeramischen Platten aufnehmen kann, die alle denselben akustischen Abstand von der Referenzachse aufweisen. Gleichzeitig kann durch die Form des Schallleitkörpers sichergestellt werden, dass sämtliche Schallwellen, insbesondere Ultraschallwellen oder Megaschallwellen, zu der Referenzachse geleitet werden, so dass eine Fokussierung entsteht.

In einer besonders vorteilhaften Ausführungsform hat der regelmäßige Polygon zwischen 3 und 20 Außenflächen, auf denen zwischen 3 und 40 piezokeramische Platten angebracht sind. Somit ist besonders vorteilhaft vorgesehen, dass entweder eine oder zwei piezokeramische Platten pro Außenfläche vorhanden sind. In einer weiteren besonders vorteilhaften Ausführungsform ist das regelmäßige Polygon hexagonal geformt. Auf diese Weise lässt sich einfach und aufwandsarm der Schallleitkörper fertigen, wobei der Schallleitkörper gleichzeitig eine sichere und zuverlässige Fokussierung der Ultraschallwellen ermöglicht.

Der Schallleitkörper ist bevorzugt ein Vollkörper oder alternativ ein mit einem Fluid gefüllter Hohlkörper. Insbesondere ist vorgesehen, dass der Schallleitkörper eine geringe Dämpfung von Ultraschallwellen aufweist. Dadurch wird erreicht, dass ein Energieverlust innerhalb des Schallleitkörpers minimiert ist, so dass hohe Energien zum Verschweißen der Verpackungen zur Verfügung stehen.

Der Schallleitkörper ist bevorzugt aus einem metallischen Werkstoff und/oder aus einem keramischen Werkstoff und/oder aus einem thermoplastischen Werkstoff gefertigt. Besonders vorteilhaft ist der Schallleitkörper elektrisch leitfähig. Dabei ist insbesondere vorgesehen, dass eine Dämpfung des Materials, aus dem der Schallleitkörper gefertigt ist, für Ultraschallwellen gering ist, wodurch ein Energieverlust innerhalb des Schallleitkörpers minimiert ist.

An jeder piezokeramischen Platte ist bevorzugt an zwei gegenüberliegenden Seitenflächen jeweils eine Elektrode angeordnet. Eine der Elektroden ist somit zwischen piezokeramischer Platte und Schallleitkörper platziert, während die andere Elektrode auf derjenigen Seitenfläche der piezokeramischen Platte angebracht ist, die von dem Schallleitkörper weg weist. Dabei ist vorgesehen, dass der Schallleitkörper zumindest an der Außenfläche elektrisch leitfähig oder elektrisch leitfähig beschichtet ist. Auf diese Weise werden alle Elektroden, die zwischen piezokeramischer Platte und Schallleitkörper angeordnet sind, elektrisch miteinander kontaktiert, um somit eine Parallelschaltung der Elektroden zu ermöglichen. Ebenso bedeutet dies, dass lediglich der elektrisch leitfähige oder der elektrisch leitfähig beschichtete, Schallleitkörper elektrisch kontaktiert werden muss, um somit die Elektroden zwischen Schallleitkörper und piezokeramischen Platten elektrisch anzusprechen. Dadurch ist eine Verkabelung der Verpackungsanlage vereinfacht, so dass ein Herstellungsaufwand der Verpackungsanlage minimiert ist.

Besonders vorteilhaft ist außerdem vorgesehen, dass das Megaschallsiegelgerät zumindest ein elektrisches Kontaktelement, insbesondere mehrere elektrische Kontaktelemente, aufweist. Das elektrische Kontaktelement kontaktiert die verbleibenden Elektroden, d.h., diejenigen Elektroden, die nicht zwischen Schallleitkörper und piezokeramischer Platte liegen. Insbesondere erfolgt das elektrische Kontaktieren über eine Feder, besonders vorteilhaft über eine Federplatte und/oder eine Spiralfeder und/oder einen Federstift. Die Feder ist bevorzugt aus Kupfer, Aluminium oder Messing gefertigt. Somit ist das Übertragen von hohen Spannungen möglich, so dass die piezokeramischen Platten mit einer hohen Energie angesteuert werden können. Insbesondere ist besagte Energie höher als im Stand der Technik, indem eine elektrische Kontaktierung durch Lötverbindungen hergestellt wird. Durch das elektrische Kontaktelement wird wiederum eine Parallelschaltung sämtlicher Elektroden, die nicht zwischen piezokeramischer Platte und Schallleitkörper liegen, etabliert. Um sämtliche piezokeramischen Platten anzuregen, muss somit lediglich eine Spannung zwischen Schallleitkörper und elektrischem Kontaktelement angelegt werden. Auf diese Weise ist die Ansteuerung der Verpackungsanlage, insbesondere des Megaschallsiegelgeräts, stark vereinfacht, wobei insbesondere ein hoher Verkabelungsaufwand nicht notwendig ist. Vielmehr ist lediglich ein einziges Kabel zum Kontaktieren des elektrischen Kontaktelements notwendig. Durch das elektrische Kontaktelement sowie durch den Schallleitkörper ist sichergestellt, dass eine angelegte elektrische Spannung gleichmäßig auf alle piezokeramischen Platten verteilt wird.

Ein Verhältnis von Apertur zu Fokusabstand ist bevorzugt 1. Die Apertur wird dabei insbesondere senkrecht zu der Referenzachse gemessen. Insbesondere entspricht die Apertur dem maximalen Abstand von Außenkanten der piezokeramischen Platten in der Richtung senkrecht zu der Referenzachse. Der Fokusabstand wird senkrecht zu der Apertur gemessen. Insbesondere entspricht der Fokusabstand dem maximalen Abstand der piezokeramischen Platten und der Referenzachse in der Richtung senkrecht zu der Apertur. Auf diese Weise lässt sich insbesondere ein Abstand des Fokuspunkts von der Referenzfläche einstellen, wobei gleichzeitig eine Breite der Schweißnaht festgelegt wird. Insbesondere ist vorgesehen, dass eine Breite der Schweißnaht zwischen 0,5 mm und 5 mm gewählt werden kann. Eine Dicke des Schallleitkörpers, die parallel zu der Referenzachse gemessen wird, beträgt bevorzugt zumindest 10 mm. Auf diese Weise lässt sich eine Schweißnaht generieren, die ebenfalls eine Länge von zumindest 10 mm aufweist. Die vorhandenen piezokeramischen Platten weisen eine Abmessung entlang der Längsachse auf, die ebenfalls zumindest 10 mm beträgt. Bevorzugt beträgt eine maximale Länge der piezokeramischen Platten entlang der Längsachse maximal 1000 mm.

Die Verpackungsanlage erlaubt insbesondere das hochgenaue Verschweißen von Verpackungen mittels eines Megaschallsiegelgeräts, wobei das Megaschallsiegelgerät keine akustische Linse aufweist. Dadurch sind Energieverluste minimiert. Außerdem weisen die piezokeramischen Platten einfache Geometrien auf, wodurch die Fertigung vereinfacht und der Wirkungsgrad erhöht ist.

Der Schallleitkörper weist bevorzugt eine Austrittsfläche auf. Über die Austrittsfläche erfolgt ein Austreten sämtlicher generierter Ultraschallwellen des Megaschallsiegelgeräts, wobei diese auf die Referenzachse fokussiert sind.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Ansicht eines Fügewerkzeugs einer Verpackungsanlage gemäß einem Ausführungsbeispiel der Erfindung,
- Figur 2: eine schematische Detailansicht des Fügewerkzeugs der Verpackungsanlage gemäß dem Ausführungsbeispiel der Erfindung, und
- Figur 3: eine schematische räumliche Ansicht des Fügewerkzeugs der Verpackungsanlage gemäß dem Ausführungsbeispiel der Erfindung.

### Ausführungsform der Erfindung

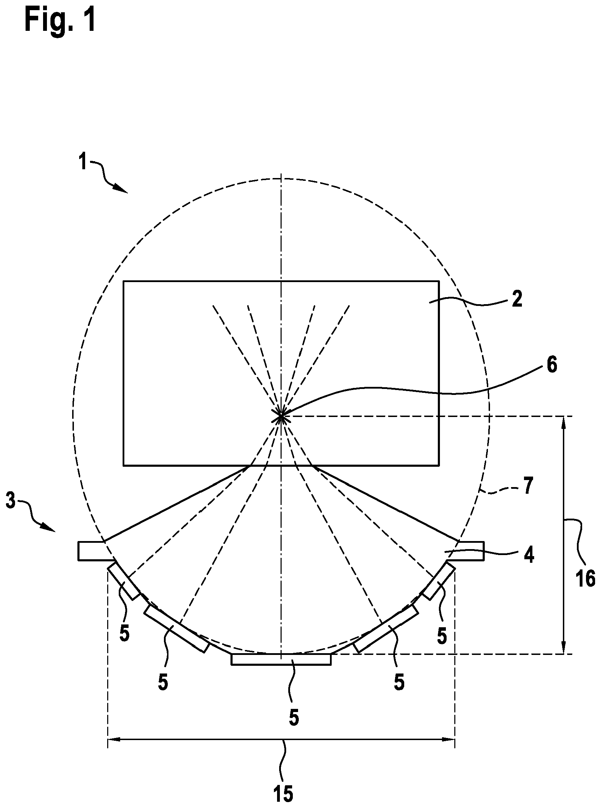

Figur 1 zeigt schematisch ein Fügewerkezeug einer Verpackungsanlage 1 gemäß einem Ausführungsbeispiel der Erfindung. Dabei wird eine Verpackung 2, insbesondere ein Beutel und/oder eine Folie und/oder ein Packstoff, mittels einer Siegelnaht versiegelt. Zum Herstellen der Siegelnaht wird ein Megaschallsiegelgerät 3 verwendet. Das Megaschallsiegelgerät 3 umfasst einen Schallleitkörper 4 zum Leiten von Ultraschallwellen, insbesondere von Megaschallwellen, auf eine Referenzachse 6. An dem Schallleitkörper 4 ist eine Vielzahl von piezokeramischen Platten 5 angeordnet.

Der Schallleitkörper 4 ist ein Vollkörper oder ein mit Fluid gefüllter Hohlkörper und weist eine geringe Materialdämpfung von Ultraschallwellen auf. Der Schallleitkörper 4 weist einen Querschnitt in Form eines Fragments eines Polygons auf, wobei der Querschnitt senkrecht zu der Referenzachse 6 bestimmt wird. Durch die Form des Fragments des regelmäßigen Polygons weist der Schallleitkörper 4 eine Vielzahl von Außenflächen 8 auf. Außenflächen 8 sind dabei nur solche Flächen, die auch bei dem vollständigen regelmäßigen Polygon vorhanden wären, so dass insbesondere Bruchflächen, die beim Ausbrechen des Fragments aus dem regelmäßigen Polygon entstehen, nicht als Außenflächen 8 im Sinne dieser Erfindung angesehen werden. Insbesondere liegt jede Außenfläche 8 an einem Nominalkreis oder an einer Nominalellipse des regelmäßigen Polygons an. In Figur 1 ist schematisch eine Referenzellipse 7 eingezeichnet, die sich um einen Mittelpunkt erstreckt, der auf der Referenzachse 6 liegt. Die Referenzellipse 7 liegt somit an jeder der Außenflächen 8 des Schallleitkörpers 4 an. Sämtliche piezokeramischen Platten 5 sind tangential an der Referenzellipse 7 angeordnet.

Die piezokeramischen Platten 5 erstrecken sich allesamt entlang jeweils einer Längsachse, wobei die Längsachsen der piezokeramischen Platten 5 parallel zu der Referenzachse 6 verlaufen. Die Längsachse entspricht dabei einer solchen Achse der piezokeramischen Platte 5, entlang derer sich die piezokeramische Platte 5 mit einer größten Abmessung erstreckt. Besonders vorteilhaft ist vorgesehen, dass eine Länge und eine Breite, die jeweils in einer Ebene gemessen werden, die parallel zu der Referenzachse 6 ausgerichtet ist, zumindest das Vierfache von einer Dicke der piezokeramischen Platte 5 betragen, so dass ein sicheres und zuverlässiges Anregen einer Resonanzschwingung erfolgen kann.

Der Schallleitkörper 4 weist bevorzugt zwischen 3 und 20 Außenflächen 8 auf. An jeder Außenfläche 8 ist vorteilhafterweise eine piezokeramische Platte 5 oder es sind vorteilhafterweise zwei piezokeramische Platten 5 angebracht. Somit weist das Megaschallsiegelgerät 3 eine Anzahl zwischen 3 und 40 piezokeramischen Platten auf.

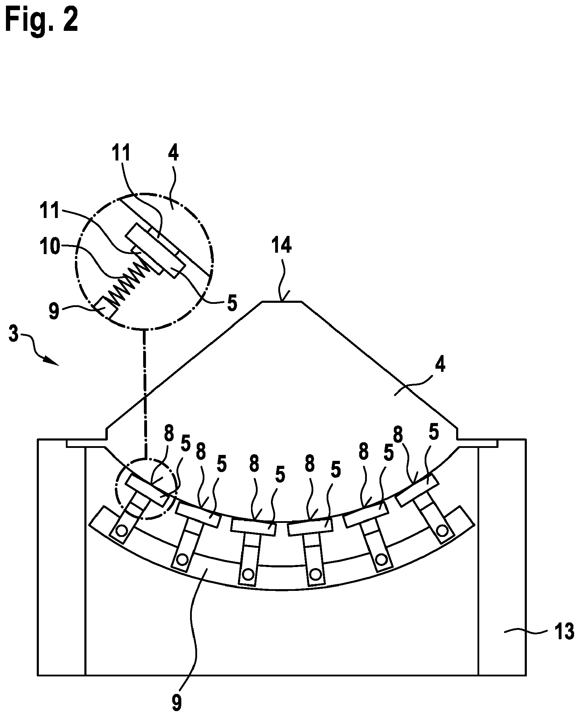

Figur 2 zeigt eine schematische Detailansicht des Megaschallsiegelgeräts 3 der Verpackungsanlage 1. Dabei ist ersichtlich, dass der Schallleitkörper 4 eine Austrittsfläche 14 aufweist. Außerdem ist der Schallleitkörper 4 derart geformt, dass sämtliche Ultraschallwellen zu der Austrittsfläche 14 geleitet werden. Die Austrittsfläche 14 ist beabstandet von der Referenzachse 6, wobei innerhalb der Referenzachse 6 sämtliche Ultraschallwellen aufeinandertreffen. Somit ist ermöglicht, dass einerseits eine Fokussierung vorhanden ist, andererseits eine hohe Energie zum Verschweißen der Verpackungen 2 generiert werden kann. Dadurch ist ermöglicht, dass Verpackungsmaterialien mit einer Dicke zwischen 5 µm und 50 mm hochgenau verschweißt werden können, sodass ein Abstand zwischen Referenzachse 6 und Austrittsfläche 14 des Megaschallsiegelgeräts 3 bevorzugt zwischen 0,005 mm und 50 mm beträgt.

Dadurch, dass der Schallleitkörper 4 direkt die Ultraschallwellen fokussiert, ist außerdem ein Energieverlust vermieden, der durch den Einsatz von akustischen Linsen entstehen würde. Außerdem kann die gesamte Oberfläche der piezokeramischen Platten 5 zum Generieren von Ultraschallwellen verwendet werden, da der Schallleitkörper durch den Querschnitt an die piezokeramischen Platten angepasst ist. Insbesondere muss kein angepasstes piezokeramisches Element vorgesehen sein, das nur mit Energieverlusten angeregt werden kann. Somit ist wiederum sichergestellt, dass eine hohe Schweißleistung erfolgt. Dies führt dies zu einer verbesserten Hitzeentwicklung während des Schweißvorgangs und daher zu einer hochwertigen Schweißnaht.

Die hohen Schweißleistungen können auch dann erreicht werden, wenn keine Flüssigkeit verwendet wird, um das Megaschallsiegelgerät an die Verpackung zu koppeln. Dies ist im Stand der Technik oftmals notwendig, kann jedoch bei Verpackungsanlagen nicht immer umgesetzt werden, da ansonsten die Gefahr eines ungewünschten Kontaminierens der zu verpackenden Güter besteht. Durch die Verpackungsanlage 1, wie in den Figuren gezeigt, ist dieses Problem gelöst.

Das Megaschallsiegelgerät 3 weist außerdem einfache Geometrien auf, wobei insbesondere das Megaschallsiegelgerät 3 aufgrund seiner einfachen Geometrie einfach und aufwandsarm in die Verpackungsanlage 1 integriert werden kann. Somit sind die Herstellungskosten für die Verpackungsanlage sowie die Wartungskosten der Verpackungsanlage minimiert.

Um die Ultraschallwellen zu erzeugen, werden die piezokeramischen Platten 5 in Schwingungen versetzt. Diese mechanischen Schwingungen betragen insbesondere die Eigenfrequenz der piezokeramischen Platten 5, die zwischen 0,5 MHz und 5 MHz liegt. Dabei ist vorgesehen, dass die piezokeramischen Platten 5 ausschließlich in ihrer Eigenfrequenz oder Resonanzfrequenz betrieben werden. Durch die zuvor beschriebenen Größenverhältnisse ist sichergestellt, dass sich eine stabile und zuverlässige Resonanzschwingung einstellt. Bevorzugt ist die Eigenfrequenz oder Resonanzfrequenz der piezokeramischen Platten identisch.

Die so erzeugten mechanischen Schwingungen der piezokeramischen Platten 5 werden auf den Schallleitkörper 4 übertragen. Dadurch werden die Ultraschallwellen generiert. Diese Ultraschallwellen verlaufen durch den Schallleitkörper 4 zu der Austrittsfläche 14, um von dort zu der Referenzachse 6 zu gelangen. Durch die Anordnungen der piezokeramischen Platten 5 an dem Schallleitkörper 4 ist sichergestellt, dass alle Ultraschallwellen auf die Referenzachse 6 gelenkt werden. Somit werden sämtliche Ultraschallwellen einfach und aufwandsarm auf die Referenzachse 6 fokussiert.

Besonders vorteilhaft ist vorgesehen, dass eine Abmessung des Schallleitkörpers 4 gemessen entlang der Referenzachse 6 zumindest 10 mm beträgt. Somit kann auch eine Schweißnaht generiert werden, die eine Länge von 10 mm aufweist. Eine Breite der Schweißnaht kann durch Wahl von Apertur 15 und Fokusabstand 16 zwischen 0,5 mm und 5 mm gewählt werden. Besonders vorteilhaft ist das Verhältnis zwischen Apertur 15 und Fokusabstand 16 stets 1. Die Apertur 15 entspricht dem maximalen Abstand von Außenkanten der piezokeramischen Platten 5 in einer Richtung senkrecht zu der Referenzachse 6. Der Fokusabstand 16 entspricht dem maximalen Abstand der piezokeramischen Platten 5 und der Referenzachse in einer Richtung senkrecht zu der Apertur 15.

Die Referenzachse 6 ist vorteilhafterweise von der Austrittsfläche 14 beabstandet. Somit ist ermöglicht, dass ein Verschweißen auch in einem Inneren der Verpackungen 2 erfolgen kann, da sich erst in der Referenzachse 6 sämtliche Ultraschallwellen vereinen. Somit können die einzelnen Ultraschallwellen die Oberflächen der Verpackungen 2 durchdringen, und erst an der Referenzachse 6 für ein ausreichendes Aufheizen der Verpackungen 2 sorgen, so dass ausschließlich an der Referenzachse 6 ein Verschweißen stattfindet. Die Oberflächen der Verpackungen 2 werden dann nicht beschädigt.

Um die piezokeramischen Platten 5 anzuregen, werden diese mit einem elektrischen Feld beaufschlagt. Dazu sind an Seitenflächen der piezokeramischen Platten 5 Elektroden 11 angebracht, wobei eine der Elektroden 11 zwischen piezokeramischer Platte 5 und Schallleitkörper 4 angeordnet ist. Die andere Elektrode 11 ist auf einer Seitenfläche der piezokeramischen Platte 5 angebracht, die von dem Schallleitkörper 4 weg weist.

In Figur 2 ist gezeigt, dass der Schallleitkörper 4 in ein Gehäuse 13 eingesetzt ist. Innerhalb des Gehäuses 13 befindet sich ein elektrisches Kontaktelement 9, das sämtliche Elektroden 11 kontaktiert, die auf derjenigen Seitenfläche der piezokeramischen Platten 5 angebracht sind, die von dem Schallleitkörper 4 wegweisen. Das Kontaktieren des elektrischen Kontaktelements 9 mit den Elektroden 11 erfolgt über eine Feder 10, insbesondere über eine Federplatte und/oder eine Spiralfeder und/oder einen Federstift. Die Feder 10 ist insbesondere aus Kupfer gefertigt. Auf diese Weise ist ein sicheres und zuverlässiges elektrisches Kontaktieren selbst dann ermöglicht, wenn die piezokeramischen Platten 5 angeregt werden und vibrieren. Gleichzeitig lassen sich über die Feder 10 hohe Ströme übertragen, so dass ein Ansteuern auch mit hoher Energie erfolgen kann.

Der Schallleitkörper 4 ist zumindest an den Außenflächen 8 elektrisch leitfähig oder elektrisch leitfähig beschichtet. Somit erfolgt ein Kontaktieren sämtlicher Elektroden 11, die zwischen piezokeramischer Platte 5 und Schallleitkörper 4 angeordnet sind, durch den Schallleitkörper 4. Somit ist eine Parallelschaltung sämtlicher piezokeramischer Platten 5 vorhanden, wobei lediglich an das elektrische Kontaktelement 9 und an den Schallleitkörper 4 eine Spannung anzulegen ist. Wird eine solche Spannung angelegt, so werden die piezokeramischen Platten 5 angeregt, was, wie zuvor beschrieben, zur Generierung der Ultraschallwellen führt.

Durch eine derartige Verschaltung der Elektroden 11 ist ein Verkabelungsaufwand des Megaschallsiegelgeräts und damit der Verpackungsanlage 1 minimiert. Somit kann die Verpackungsanlage 1 einfach und aufwandsarm hergestellt und gewartet werden. Dennoch erfolgt ein fokussiertes Ausgeben von Ultraschallwellen, um somit hohe Energien zum Schweißen bereitzustellen.

Die einzelnen piezokeramischen Platten 5 werden somit alle phasengleich angesteuert. Eine komplizierte Steuerung zum phasenverschiedenen Ansteuern von einzelnen piezokeramischen Platten 5 wie im Stand der Technik ist nicht notwendig. Vielmehr erfolgt ein mechanisches Regulieren der Phasen der einzelnen piezokeramischen Platten 5 durch die abgewinkelten Außenflächen 8 des Schallleitkörpers 4. Besonders vorteilhaft ist der Schallleitkörper hexagonal geformt, wodurch der gesamte Montageaufwand des Megaschallsiegelgeräts 3 und der Verpackungsanlage 1 minimiert ist. Aufgrund des flächigen Anliegens der piezokeramischen Platten 5 an dem Schallleitkörper 4 ist, wie zuvor beschrieben, die gesamte Fläche der piezokeramischen Platten 5 nutzbar, um die Ultraschallwellen zu erzeugen. Dies führt zu einem optimalen Ausnutzen der zum Anregen der piezokeramischen Platten 5 verwendeten Energie. Dabei ist außerdem ein Anbinden der piezokeramischen Platten 5 an dem Schallleitkörper 4 vereinfacht.

Der Schallleitkörper 4 wird vorteilhafterweise aus einem metallischen, keramischen, thermoplastischen oder aus einem Verbundwerkstoff gefertigt. Wie zuvor bereits beschrieben, kann der Schallleitkörper 4 ein Vollkörper oder ein mit Fluid gefüllter Hohlkörper sein, wobei in jedem Fall sichergestellt ist, dass der Schallleitkörper 4 eine geringe Dämpfung von Ultraschallwellen aufweist.

Die Breite der Austrittsfläche 14, die senkrecht zu der Referenzachse 6 gemessen wird, ist vorteilhafterweise größer als die Wellenlänge des Materials, aus dem der Schallleitkörper 4 gefertigt ist. Besonders vorteilhaft trifft das zuvor beschriebene Verhältnis zwischen Apertur 15 und Fokusabstand 16 auf.

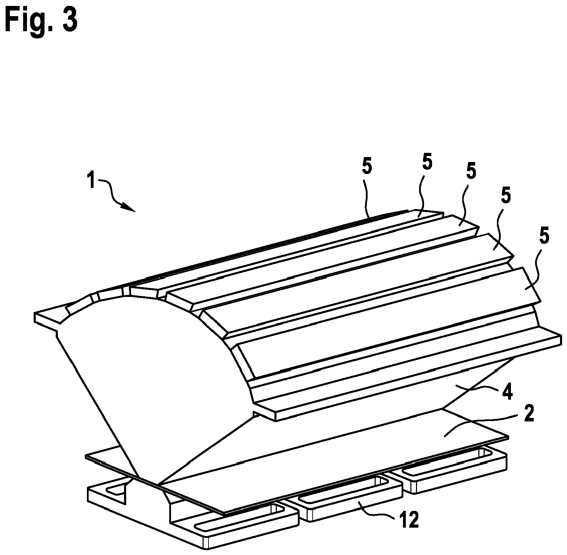

Figur 3 zeigt schematisch eine räumliche Repräsentation der Verpackungsanlage 1. Dabei ist ersichtlich, dass große Schweißnähte einfach und aufwandsarm realisiert werden können. Insbesondere ist das Realisieren einer großen Dicke des Schallleitkörpers 4 und damit einer langen Schweißnaht aufgrund des einfachen Aufbaus des Megaschallsiegelgeräts 3 einfach und aufwandsarm möglich. Durch die Geometrie des Schallleitkörpers ist außerdem das Ansteuern der piezokeramischen Platten vereinfacht. Zum Ausführen einer Schweißnaht wird eine Verpackung 2 zwischen dem Megaschallsiegelgerät 3 und einem Gegenhalter 12 hindurchgeführt. Somit lässt sich eine ausreichende Anpresskraft des Megaschallsiegelgeräts 3 an die Verpackung 2 erreichen, wodurch ein sicheres und zuverlässiges Ausbildungen einer Schweißnaht erreicht werden kann.

## Patentansprüche

1. Verpackungsanlage (1) umfassend ein Megaschallsiegelgerät (3) zum Verschweißen von Verpackungen (2), wobei das Megaschallsiegelgerät (3) aufweist:
• einen Schallleitkörper (4) zum Leiten von Ultraschallwellen, und
• eine Vielzahl von piezokeramischen Platten (5), die an dem Schallleitkörper (4) angebracht sind und die sich entlang jeweils einer Längsachse erstrecken,
• wobei durch elektrische Anregung der piezokeramischen Platten (5) Ultraschallwellen generierbar sind, und
• wobei ein akustischer Abstand jeder piezokeramischen Platte (5) von einer vordefinierten Referenzachse (6), die zu den Längsachsen parallel ist, identisch ist.

2. Verpackungsanlage (1) nach Anspruch 1, **dadurch gekennzeichnet, dass** alle piezokeramischen Platten (5) tangential an einer Referenzellipse (7) angeordnet sind, dessen Mittelpunkt auf der vordefinierten Referenzachse (6) liegt.

3. Verpackungsanlage (1) nach einem der vorhergehenden Ansprüche, **dadurch gekennzeichnet, dass** die piezokeramischen Platten (5) mit einer Seitenfläche vollständig an dem Schallleitkörper (4) anliegen.

4. Verpackungsanlage (1) nach einem der vorhergehenden Ansprüche, **dadurch gekennzeichnet, dass** die piezokeramischen Platten eine Eigenfrequenz zwischen 0,5 MHz und 5,0 MHz aufweisen.

5. Verpackungsanlage (1) nach einem der vorhergehenden Ansprüche, **dadurch gekennzeichnet, dass** der Schallleitkörper (4) einen Querschnitt aufweist, der einem Fragment eines Polygons entspricht, wobei an jeder Außenfläche (8) des Schallleitkörpers (4), die in dem Querschnitt einer Kante des Polygons entspricht, zumindest eine piezokeramische Platte (5) angebracht ist.

6. Verpackungsanlage (1) nach einem der vorhergehenden Ansprüche, **dadurch gekennzeichnet, dass** der Schallleitkörper (4) ein Vollkörper oder ein mit einem Fluid gefüllter Hohlkörper ist.

7. Verpackungsanlage (1) nach einem der vorhergehenden Ansprüche, **dadurch gekennzeichnet, dass** der Schallleitkörper (4) aus einem metallischen und/oder keramischen und/oder thermoplastischen Material gefertigt ist.

8. Verpackungsanlage (1) nach einem der vorhergehenden Ansprüche, **dadurch gekennzeichnet, dass** an jeder piezokeramischen Platte (5) an zwei gegenüberliegenden Seitenflächen jeweils eine Elektrode (11) angeordnet ist, wobei einer der Elektroden (11) zwischen piezokeramischen Platte (5) und Schallleitkörper (4) liegt und von dem Schallleitkörper (4) elektrisch kontaktiert ist, und wobei der Schallleitkörper (4) elektrisch leitfähig oder elektrisch leitfähig beschichtet ist.

9. Verpackungsanlage nach Anspruch 8, **dadurch gekennzeichnet, dass** das Megaschallsiegelgerät (3) ein elektrisches Kontaktelement (9) aufweist, das jede Elektrode (11), die nicht zwischen Schallleitkörper (4) und piezokeramischer Platte (5) liegt, insbesondere über eine Feder (10), elektrisch kontaktiert.

10. Verpackungsanlage (1) nach einem der vorhergehenden Ansprüche, **dadurch gekennzeichnet, dass** ein Verhältnis von Apertur (15) zu Fokusabstand (16) bevorzugt 1 ist.
